# EUROPEAN PATENT SPECIFICATION

(11) **EP 3 454 228 B1**
(45) Date of publication and mention of the grant of the patent: **02.06.2021**
(21) Application number: 18192426.7
(22) Date of filing: 04.09.2018
(51) Int. Cl.: G06F 3/0482, G06F 3/0483, G06F 16/957

(54) **METHOD AND DEVICE FOR DISPLAYING CONTENT**
VERFAHREN UND VORRICHTUNG ZUR ANZEIGE VON INHALT
PROCÉDÉ ET DISPOSITIF POUR AFFICHER UN CONTENU

(30) Priority: 07.09.2017 CN 201710802386
(43) Date of publication of application: 13.03.2019
(73) Proprietor: Beijing Xiaomi Mobile Software Co., Ltd., Beijing 100085 (CN)
(72) Inventor: LU, Zhenzhou, Haidian District, Beijing 100085 (CN); LI, Lan, Haidian District, Beijing 100085 (CN); LI, Jiayan, Haidian District, Beijing 100085 (CN)
(74) Representative: Jeffrey, Philip Michael

(56) References cited:
- WO-A1-2008/121986
- US-A1- 2005 034 068
- US-A1- 2006 075 353
- US-A1- 2012 192 057
- US-A1- 2014 053 103

## Description

### TECHNICAL FIELD

The present disclosure relates to information display field, and more particularly, to a method and a device for displaying content.

### BACKGROUND

As one of most common applications in mobile terminals, browsers bring a lot of convenience for daily web browsing of users.

When a user reads an article using a browser on a web page, the user usually reads the entire content of the article from top to bottom. When the article is too long to be fully displayed on one page, the user may read the entire article through a slide gesture during reading.

US 2006/075353 discloses a system and method that provide an organized view of computer content clippings including text, documents, pictures, and other file types.

US 2012/192057 A1 discloses a method wherein a user can hide/unhide various types of content in a document containing text and figures.

### SUMMARY

In order to solve problems that reading efficiency is low when a user reads an entire article through a slide gesture during reading in the related art, embodiments of the present disclosure provide a method and a device for displaying content. The technical solutions include the following.

According to a first aspect, there is provided a method for displaying content as claimed in claim 1.

In at least one embodiment, displaying the at least one mode selection button in the virtual button bar according to the type of the content included in the current display content includes: displaying a first mode selection button in the virtual button bar when the current display content includes text content, in which the first mode selection button is configured to trigger the application to enter a first display mode, and only the text content is displayed in the application in the first display mode; and/or displaying a second mode selection button in the virtual button bar when the current display content includes picture content, in which the second mode selection button is configured to trigger the application to enter a second display mode, and only the picture content is displayed in the application in the second display mode; and/or displaying a third mode selection button in the virtual button bar when the current display content includes multimedia content, in which the third mode selection button is configured to trigger the application to enter a third display mode, and only the multimedia content is displayed in the application in the third display mode.

In at least one embodiment, the method further includes: when the application is in the first display mode, sending a first preset instruction to the application when a first selection operation on the text content is received in the first display mode, wherein the first preset instruction is configured to instruct the application to copy selected text content; or when the application is in the second display mode, sending a second preset instruction to the application when a second selection operation on the picture content is received in the second display mode, wherein the second preset instruction is configured to instruct the application to copy selected picture content; or when the application is in the third display mode, sending a third preset instruction to the application when a third selection operation on the multimedia content is received in the third display mode, wherein the third preset instruction is configured to instruct the application to download selected multimedia content.

In at least one embodiment, when there are m mode selection buttons, displaying at least one mode selection button in the virtual button bar includes: displaying the first mode selection button to the n^{th} mode selection button in the virtual button bar, where 1<n<m; and displaying the (1+k)^{th} mode selection button to the (n+k)^{th} mode selection button in the virtual button bar when detecting a sliding operation performed on the virtual button bar, where k≥1, and (n+k)≤m.

In at least one embodiment, before displaying at least one mode selection button in the virtual button bar, the method further includes: displaying a preset function button in the virtual button bar when the application is a preset application, in which the preset application is a reading and browsing type of application, and the preset function button is configured to trigger displaying the mode selection button in the virtual button bar. Displaying at least one mode selection button in the virtual button bar includes: displaying the at least one mode selection button in the virtual button bar when a trigger signal for the preset function button is received.

According to a second aspect, there is provided a device for displaying content as claimed in claim 6.

In at least one embodiment, the first display unit is configured to: display a first mode selection button in the virtual button bar when the current display content includes text content, in which the first mode selection button is configured to trigger the application to enter a first display mode, and only the text content is displayed in the application in the first display mode; and/or display a second mode selection button in the virtual button bar when the current display content includes picture content, in which the second mode selection button is configured to trigger the application to enter a second display mode, and only the picture content is displayed in the application in the second display mode; and/or display a third mode selection button in the virtual button bar when the current display content includes multimedia content, in which the third mode selection button is configured to trigger the application to enter a third display mode, and only the multimedia content is displayed in the application in the third display mode.

In at least one embodiment, the device further includes a second sending module, configured to, when the application is in the first display mode, send a first preset instruction to the application when a first selection operation on the text content is received in the first display mode, in which the first preset instruction is configured to instruct the application to copy selected text content; or a third sending module, configured to, when the application is in the second display mode, send a second preset instruction to the application when a second selection operation on the picture content is received in the second display mode, in which the second preset instruction is configured to instruct the application to copy selected picture content; or a fourth sending module, configured to , when the application is in the third display mode, sending a third preset instruction to the application when a third selection operation on the multimedia content is received in the third display mode, in which the third preset instruction is configured to instruct the application to download selected multimedia content.

According to a third aspect, there is provided a computer-readable medium. The computer-readable medium is configured to store program instructions. The program instructions are configured to, when executed by a processor, implement the method for displaying content described in the first aspect.

The technical solutions provided by embodiments of the present disclosure may have following advantageous effects.

In embodiments of the present disclosure, the virtual button bar in the related art is functionally extended, by displaying the at least one mode selection button in the virtual button bar, and sending the display instruction to the application to instruct the application to enter the corresponding display mode when the selection signal for selecting the mode selection button is received, the application only displays the content of user-specified type, and when more content is displayed in the application, it is convenient for the user to quickly screen reading content, thereby improving user's reading efficiency.

### BRIEF DESCRIPTION OF THE DRAWINGS

In order to clearly illustrate technical solutions of embodiments of the present disclosure, a brief description of drawings used in embodiments is given below. Obviously, the drawings in the following descriptions are only part embodiments of the present disclosure, and for those skilled in the art, other drawings can be obtained according to these drawings without creative labor.
Fig. 1 is a flow chart of a method for displaying content provided by an example useful for understanding the invention
Fig. 2 is a flow chart of a method for displaying content provided by another example useful for understanding the invention.
Fig. 3 is a flow chart of a method for displaying content provided by another example useful for understanding the invention.
Fig. 4 is a schematic diagram of an interface provided by an example useful for understanding the invention.
Fig. 5 is a schematic diagram of a method for displaying mode selections button provided by an embodiment of the present disclosure.
Fig. 6 to Fig. 8 are interface diagrams of implementation processes of a method for displaying content illustrated in Fig. 3.
Fig. 9 is a flow chart of a method for displaying content provided by another example useful for understanding the invention.
Fig. 10 is a flow chart of a method for displaying content provided by another exemplary embodiment of the present disclosure.
Fig. 11 is an interface diagram of an implementation process of a method for displaying content illustrated in Fig. 10.
Fig. 12 is a flow chart of a method for displaying content provided by another example useful for understanding the invention.
Fig. 13 is an interface diagram of an implementation process of a method for displaying content illustrated in Fig. 12.
Fig. 14 is a block diagram of a device for displaying content provided by an embodiment of the present disclosure.
Fig. 15 is a block diagram of a terminal provided by an exemplary embodiment of the present disclosure.

### DETAILED DESCRIPTION

In order to make objectives, technical solutions and advantages of the present disclosure clearer, embodiments of the present disclosure will be described in detail below with reference to the accompanying drawings.

For convenience of understanding, terms involved in embodiments of the present disclosure are explained below.

A virtual button bar is a strip area provided by an operating system, and virtual buttons provided by the operating system are displayed in the strip area. Different system functions can be implemented when different virtual buttons are triggered. For example, the system functions may include returning to a previous level, switching to a homepage, or expanding a menu of a currently running application.

In embodiments of the present disclosure, the number of virtual buttons displayed in the virtual button bar is a positive integer. In addition, since a size of a terminal screen is limited, generally speaking, for different terminals, the number of virtual buttons that can be simultaneously displayed on the screen has an upper limit. For example, a virtual button bar of a terminal displays n virtual buttons where n is a positive integer, and n can be a minimum of 1. Since a length of a bottom border of the terminal is limited, the upper limit of n can take 5.

The maximum value of a width of the virtual button bar has an upper limit due to a limitation of a screen width. A height of the virtual button bar can be adjusted in a certain range, so that at least two lines of virtual buttons can be displayed in the virtual button bar.

In the related art, when a user reads an article using a browser or a reading type of application, he/she usually reads the entire content of the article in an order from top to bottom. When the article is too long to be fully displayed on one page, the user needs to scroll and switch the page during reading through a sliding gesture to complete reading the whole article. Obviously, it is unable to quickly and accurately locate content that the user expects to browse (such as pictures, specified paragraphs and the like in the article) by scrolling the page through the sliding gesture, which leads to a lower reading efficiency of the user.

In embodiments of the present disclosure, by functionally extending the virtual button bar in the related art, buttons for switching display modes are displayed in the virtual button bar, so that the user can instruct an application to display a specified type of content by clicking the corresponding button, which is convenient for the user to quickly screen reading content, improving user's reading efficiency. Exemplary embodiments will be described below.

The method for display content provided by various embodiments of the present disclosure is applied to a terminal. The terminal may be a smart phone, a panel computer, an electronic book reader etc. In embodiments of the present disclosure, the terminal is installed with a reading and browsing type of application, such as a web browser, an electronic book reader etc.. When this type of application is used, a virtual button bar is displayed in the terminal interface. For ease of description, the following embodiments are described by applying the method for displaying content in a terminal.

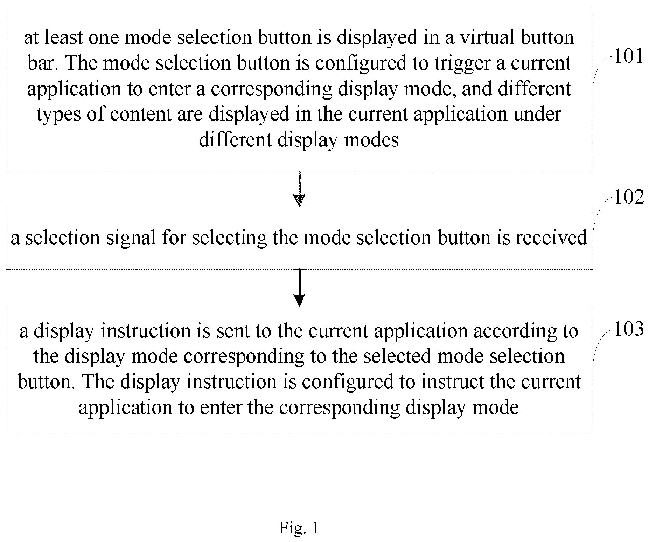

Fig. 1 is a flow chart of a method for displaying content provided by an example useful for understanding the invention, the example is exemplified by applying the method for displaying content in a terminal, and the method for displaying content includes followings.

At block 101, at least one mode selection button is displayed in a virtual button bar. The mode selection button is configured to trigger an application to enter a corresponding display mode, and different types of content are displayed in the application under different display modes.

The virtual button bar in the related art usually includes a return button, a homepage return button and a multi-task management button. Correspondingly, the user can only achieve functions of returning to a previous level of the application, exiting the application or switching between applications by clicking the virtual button in the virtual button bar.

In embodiments of the present disclosure, function extension is performed on the basis of the virtual button bar in the related art. At least one mode selection button is displayed in the virtual button bar for user selection, and the application is triggered to perform corresponding display mode according to the user's selection.

In at least one embodiment, when an application belongs to a preset application, the terminal displays the mode selection button in the virtual button bar. When an application does not belong to the preset application, the terminal does not display the mode selection button in the virtual button bar. The preset application is a reading and browsing type of application.

In at least one embodiment, the display mode of the application includes a text display mode, a picture display mode and a multimedia display mode. In the text display mode, the application only displays text content. In the picture display mode, the application only displays picture content. In the multimedia display mode, the application only displays multimedia content (such as audio and video).

In a possible implementation, there is only one mode selection button displayed in the virtual button bar, and the display mode can be switched by clicking the mode selection button. In another possible implementation, there are at least two mode selection buttons displayed in the virtual button bar, and different mode selection buttons correspond to different display modes.

At block 102, a selection signal for selecting the mode selection button is received.

At block 103, a display instruction is sent to the application according to the display mode corresponding to the selected mode selection button. The display instruction is configured to instruct the application to enter the corresponding display mode.

The virtual button bar is located in an operating system layer, while the application is located in an application layer. Therefore, in order to enable the application to respond to the selection signal for selecting the mode selection button, the terminal sends the display instruction to the application according to the display mode corresponding to the selected mode selection button after the terminal receives the selection signal for selecting the mode selection button. Correspondingly, after the application receives the display instruction sent by the system layer, the application enters display mode instructed by the display instruction.

As described above, in embodiments of the present disclosure, the virtual button bar in the related art is functionally extended, by displaying the at least one mode selection button in the virtual button bar, and sending the display instruction to the application to instruct the application to enter the corresponding display mode when the selection signal for selecting the mode selection button is received, the application only displays the content of user-specified type, and when more content is displayed in the application, it is convenient for the user to quickly screen reading content, thereby improving user's reading efficiency.

For a type of current display content in the application, the number and type of mode selection buttons displayed by the terminal in the virtual button bar are different. For example, when the current display content includes text and pictures, mode selection buttons that trigger the application to display only text and that trigger the application to display only pictures are displayed in the virtual button bar. When the current display content includes text, pictures and multimedia, mode selection buttons that trigger the application to display only text, that trigger the application to display only pictures and that trigger the application to display only multimedia are displayed in the virtual button bar. In a possible implementation, the terminal first determines the display mode supported by the current display content according to the current display content displayed in the application, and then displays corresponding mode selection button in the virtual button bar according to the determined display mode. Exemplary embodiments will be described below.

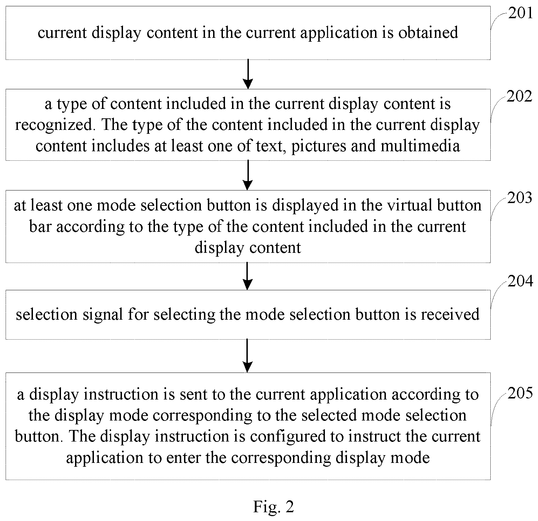

Fig. 2 is a flow chart of a method for displaying content provided by another example useful for understanding the invention, the example is exemplified by applying the method for displaying content in a terminal, and the method for displaying content includes followings.

At block 201, current display content in the application is obtained.

In a possible implementation, the operating system layer obtains the current display content in the application through an interface with the application. For example, when a user browses a webpage using a browser (an application), the operating system layer obtains current display webpage content through a program interface with the browser. The webpage content is a HTML (HyperText Markup Language) file corresponding to the webpage.

At block 202, a type of content included in the current display content is recognized. The type of the content included in the current display content includes at least one of text, pictures and multimedia.

In a possible implementation, when the application declares the type of content included in the current display content, the operating system can directly extract content type information from the current display content.

In another possible implementation, the operating system recognizes the type of content included in the current display content using a preset recognition rule.

In an example, when the current display content (webpage) acquired by the operating system is a HTML file, the operating system acquires a tag included in the HTML file, so as to determine the type of content included in the current display content according to the tag.

For example, when the HTML file includes an <img> tag, the operating system determines that the current display content includes a picture. When the HTML file includes a <video> tag, the operating system determines that the current display content includes a video. When the HTML file includes an <audio> tag, the operating system determines that the current display content includes an audio.

The example only takes the foregoing two possible content recognition manners as examples for description, but this is not construed as to limit the present disclosure.

At block 203, at least one mode selection button is displayed in the virtual button bar according to the type of the content included in the current display content.

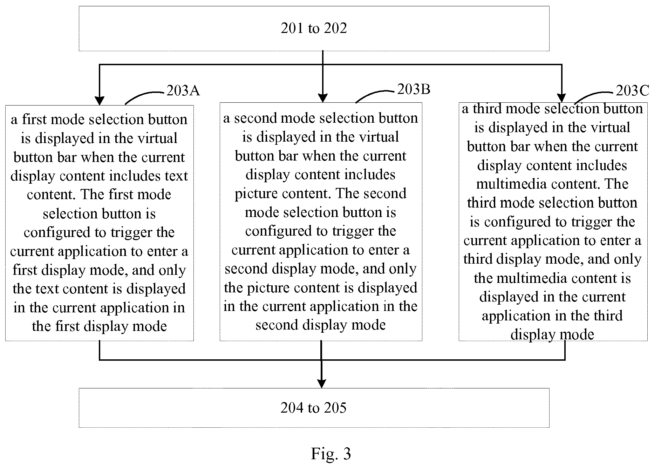

In a possible implementation, after the type of content included in the current display content is recognized at block 202, the operating system further displays mode selection buttons corresponding to respective types in the virtual button bar. As illustrated in Fig. 3, displaying the at least one mode selection button in the virtual button bar according to the type of the content included in the current display content may include followings.

At block 203A, a first mode selection button is displayed in the virtual button bar when the current display content includes text content. The first mode selection button is configured to trigger the application to enter a first display mode, and only the text content is displayed in the application in the first display mode.

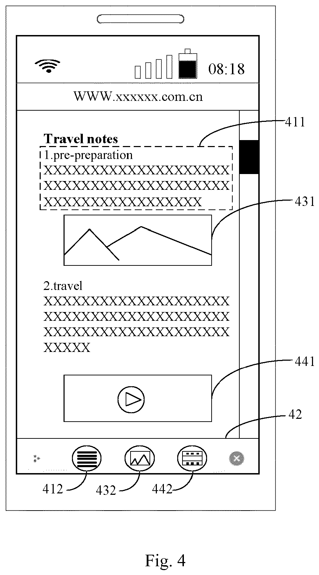

For example, as illustrated in Fig. 4, when it is recognized that the webpage includes text content 411, the terminal displays the first mode selection button 412 configured to trigger the application to enter the first display mode in the virtual button bar 42 at bottom of the screen.

At block 203B, a second mode selection button is displayed in the virtual button bar when the current display content includes picture content. The second mode selection button is configured to trigger the application to enter a second display mode, and only the picture content is displayed in the application in the second display mode.

For example, as illustrated in Fig. 4, when it is recognized that the webpage includes picture content 431, the terminal displays the second mode selection button 432 configured to trigger the application to enter the second display mode in the virtual button bar 42 at the bottom of the screen.

At block 203C, a third mode selection button is displayed in the virtual button bar when the current display content includes multimedia content. The third mode selection button is configured to trigger the application to enter a third display mode, and only the multimedia content is displayed in the application in the third display mode.

For example, as illustrated in Fig. 4, when it is recognized that the webpage includes picture content 441, the terminal displays the third mode selection button 442 configured to trigger the application to enter the third display mode in the virtual button bar 42 at the bottom of the screen. Since the number of mode selection buttons displayed in the virtual button bar is limited, the user can call mode selection buttons which are not displayed by sliding left and right on the virtual button bar.

In a possible implementation, when there are m mode selection buttons to be displayed, and virtual button bar can at most display n mode selection buttons (m>n) at the same time, i.e., the m mode selection buttons cannot be displayed in the virtual button bar at the same time. The terminal displays the first mode selection button to the n^{th} mode selection button in the virtual button bar, where 1<n <m. When a sliding operation performed on the virtual button bar is dctcctcd, the terminal displays the (1+k)^{th} mode selection button to the (n+k)^{th} mode selection button in the virtual button bar, where k≥1, and In at least one embodiment, there is positive correlation between k and a sliding distance instructed by the sliding operation, i.e., the greater the sliding distance is, the greater the k is.

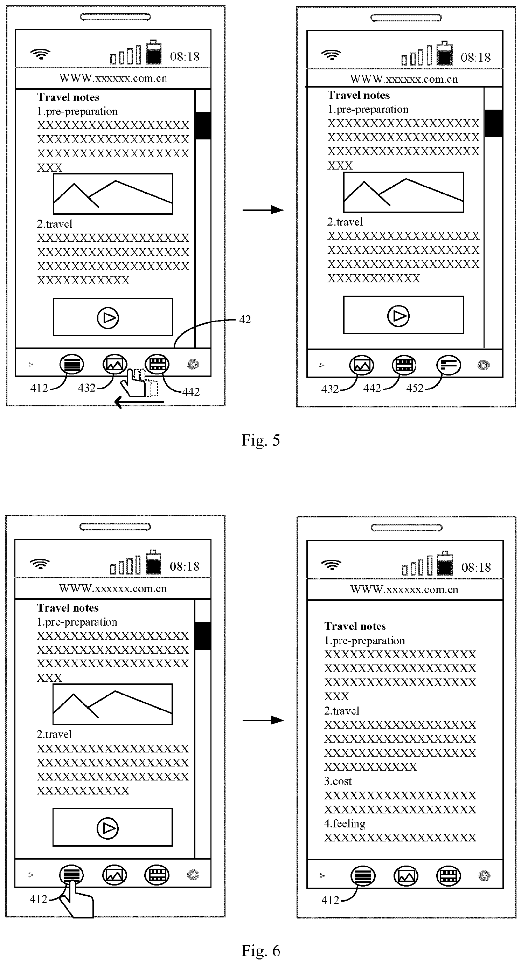

For example, as illustrated in Fig. 5, when there are 4 mode selection buttons to be displayed, which are respectively a first mode selection button 412, a second mode selection button 432, a third mode selection button 442 and a fourth mode selection button 452, the first mode selection button 412, the second mode selection button 432 and the third mode selection button 442 are displayed in the virtual button bar 42 first. When a left sliding operation performed on the virtual button bar 42 is detected, the second mode selection button 432, the third mode selection button 442 and the fourth mode selection button 452 are displayed in the virtual button bar 42.

In other possible implementations, the terminal displays the mode selection buttons according to a frequency of use of the mode selection buttons, and the mode selection button with a high frequency of use may be displayed in priority. In another possible implementation, the terminal counts a proportion of different types of display content in the current display content respectively, and the terminal displays the mode selection buttons according to the proportion of the different types of display content, in which, the mode selection button corresponding to the display content with a high proportion will be displayed in priority.

At block 204, selection signal for selecting the mode selection button is received.

For example, as illustrated in Fig. 4, when the current display content includes text content, picture content and video content, the terminal receives the selection signal through the first mode selection button 412, the second mode selection button 432 and the third mode selection button 442.

At block 205, a display instruction is sent to the application according to the display mode corresponding to the selected mode selection button. The display instruction is configured to instruct the application to enter the corresponding display mode.

When the operating system receives a selection signal for selecting the first mode selection button, the operating system sends a first display instruction to the application. After the application receives the first display instruction, the application enters the first display mode and only the text content in the current display content is displayed.

For example, as illustrated in Fig. 6, after the user clicks the first mode selection button 412, the application only displays the text content included in the current display content according to the display instruction sent by the operating system.

When the operating system receives a selection signal for selecting the second mode selection button, the operating system sends a second display instruction to the application. After the application receives the second display instruction, the application enters the second display mode and only the picture content included in the current display content is displayed.

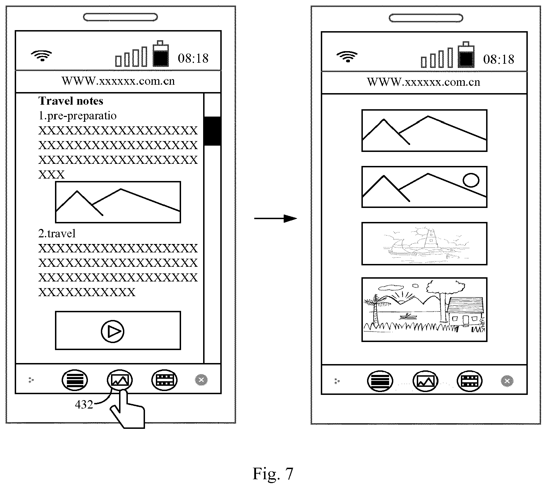

For example, as illustrated in Fig. 7, after the user clicks the second mode selection button 432, the application only displays the picture content included in the current display content according to the display instruction sent by the operating system.

When the operating system receives a selection signal for selecting the third mode selection button, the operating system sends a third display instruction to the application. After the application receives the third display instruction, the application enters the third display mode and only the multimedia content included in the current display content is displayed.

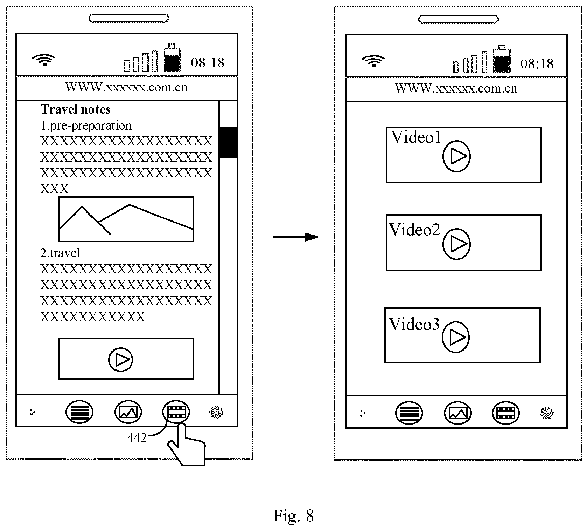

For example, as illustrated in Fig. 8, after the user clicks the third mode selection button 442, the application only displays the multimedia content included in the current display content according to the display instruction sent by the operating system. In at least one embodiment, after the application enters the corresponding display mode according to the display instruction and after the application receives the selection signal for selecting the display content from the user, the application jumps to display the display content selected by the user from displaying the current display content, so that the user can start reading from the selected location.

In embodiments of the present disclosure, the terminal displays the corresponding mode selection button in the virtual button bar according to the type of the current display contcnt, so as to ensure that the application is able to enter the corresponding display mode according to the user selection, thereby improving the reading efficiency of the user. The terminal may also switch among the different display modes directly when the mode selection button is activated. For example, the terminal may switch from the first display mode to the second display mode when the second mode selection button is activated in the first display mode. Similarly, the terminal may switch from the third display mode to the second display mode. The terminal may switch from the first display mode to the third display mode. The terminal may switch from the second display mode to the third display mode. The terminal may switch from the second display mode to the first display mode. The terminal may switch from the third display mode to the first display mode.

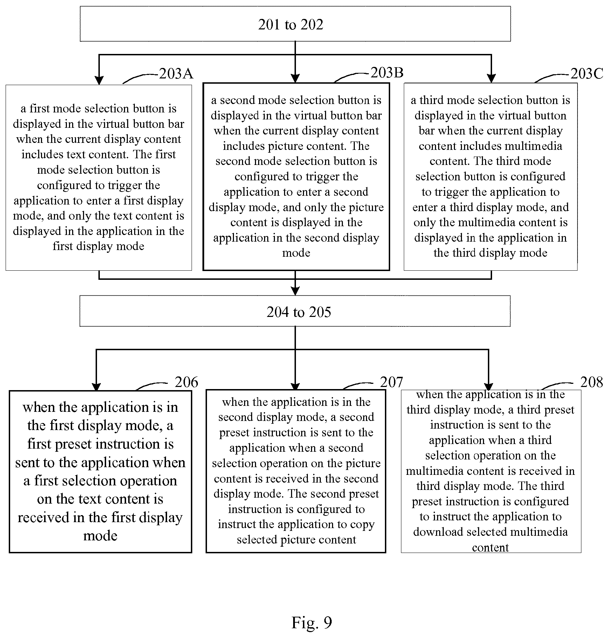

After clicking the mode selection button to enter the corresponding display mode, the user can copy, download or share the specified type of content in the display mode. In a possible implementation, on the basis of Fig. 3, as illustrated in Fig. 9, the followings are included after block 205.

At block 206, when the application is in the first display mode, a first preset instruction is sent to the application when a first selection operation on the text content is received in the first display mode. The first preset instruction is configured to instruct the application to copy selected text content.

In the related art, when the user needs to copy a plurality of paragraphs of an article and there is picture content or multimedia content between paragraphs of the text content, the user needs to copy text content of each paragraph individually and then combine them, thus the efficiency is low.

In embodiments of the present disclosure, in the first display mode, when the selection operation on the text content is received, the operating system layer sends the first preset instruction to the application to instruct the application to copy the selected text content. Since only the text content is displayed in the first display mode, even if the selected text content includes other types of content, the terminal can also copy text only, such that efficiency of copying text is improved.

For example, as illustrated in Fig. 6, it needs to perform two copy operations to copy paragraphs corresponding to "1, pre-preparation" and "2, travel" originally (because there is picture content between the two paragraphs). However, in the first display mode, because only text content is displayed, it only needs to perform one copy operation to copy the paragraphs corresponding to "1, pre-preparation" and "2, travel".

At block 207, when the application is in the second display mode, a second preset instruction is sent to the application when a second selection operation on the picture content is received in the second display mode. The second preset instruction is configured to instruct the application to copy selected picture content.

In the related art, the user can only copy one picture in a page at a time, and when multiple pictures are copied, it needs to perform multiple copy operations repeatedly, efficiency is low.

In embodiments of the present disclosure, in the second display mode, when the selection operation on the picture content is received, the operating system layer sends the second preset instruction to the application to instruct the application to copy the selected picture content. Since only the picture content is displayed in the second display mode, even if the selected picture content includes other types of content, the terminal can also copy pictures only, such that efficiency of copying picture is improved.

For example, as illustrated in Fig. 7, in the second display mode, the user can simultaneously select 4 pictures to copy.

At block 208, when the application is in the third display mode, a third preset instruction is sent to the application when a third selection operation on the multimedia content is received in third display mode. The third preset instruction is configured to instruct the application to download selected multimedia contcnt.

In the related art, the user can only download one section of multimedia content from a page at a time, and when multiple sections of multimedia content are downloaded, it needs to perform multiple download operations repeatedly, efficiency is low.

In embodiments of the present disclosure, in the third display mode, when the selection operation on the multimedia content is received, the operating system layer sends the third preset instruction to the application to instruct the application to download the selected multimedia content, so as to improve efficiency of downloading multimedia content.

For example, as illustrated in Fig. 8, in the third display mode, the user can simultaneously select 3 sections of multimedia contcnt, and instruct the application to simultaneously download the 3 sections of multimedia content.

In embodiments of the present disclosure, when the application is in one of display modes: the first display mode, the second display mode, and the third display mode, the terminal sends a preset instruction to the application when a selection operation on the displayed content is received in one of the display modes, wherein the preset instruction is configured to instruct the application to perform a corresponding action. The corresponding action may be copying or downloading. For example, after the application enters the corresponding display mode, the terminal sends a corresponding instruction to the application according to selection operation performed on target content of the user, so that the application copies or downloads the specified type of content according to the instruction, further improving operation efficiency of the user.

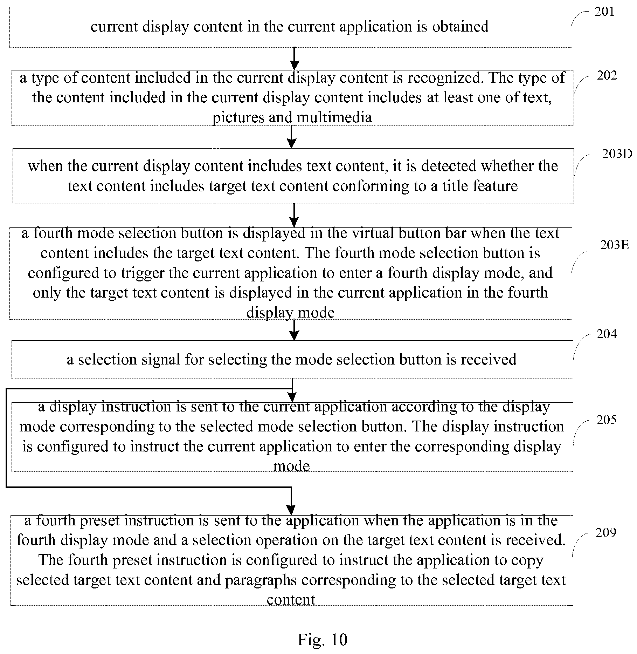

When there is a large amount of text content in the current display content, in order to further improve reading efficiency of the user, in accordance with the claimed invention, the operating system recognizes whether the current display text content includes a section title. When the current display text content includes a section title, a mode selection button configured to trigger the application to enter a fourth display mode (only the section titles in the text content are displayed) is displayed. On the basis of Fig. 2, as illustrated in Fig. 10, displaying the at least one mode selection button in the virtual button bar according to the type of the content included in the current display content (corresponding to the above block 203) further includes followings as illustrated at block 203D and 203E, and the method further includes followings as illustrated at block 209 after the selection signal for selecting the mode selection button is received (corresponding to block 204).

At block 203D, when the current display content includes text content, it is detected whether the text content includes target text content that is displayed in a format conforming to a title feature.

In accordance with the claimed invention, when it is recognized that the current display content includes text content, the terminal further detects whether the text content includes the target text content conforming to the title feature. The title feature includes features such as bold font, highlighted font, enlarged font, enlarged line spacing etc.

In other possible implementations, when the current display content (webpage) acquired by the operating system is the HTML file, the operating system acquires the tag included in the HTML file, so as to determine the type of content included in the current display content according to the tag.

For example, when the HTML file includes a <title> tag, the operating system determines the target text content (i.e. content after the <title> tag) in the current display content.

At block 203E, a fourth mode selection button is displayed in the virtual button bar when the text content includes the target text content. The fourth mode selection button is configured to trigger the application to enter a fourth display mode, and only the target text content is displayed in the application in the fourth display mode.

When it is recognized that the text content includes the target text content, the operating system further displays the fourth mode selection button in the virtual button bar, and triggers the application to enter the fourth display mode (i.e., only target text content is displayed) after the selection signal for selecting the fourth mode selection button is received.

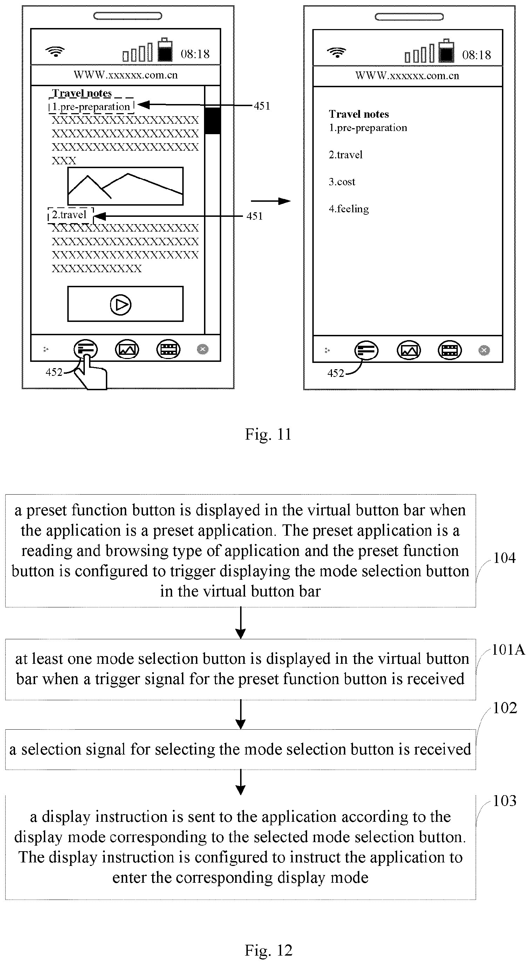

For example, as illustrated in Fig. 11, when it is recognized that the current display content includes target text content 451, the terminal displays the fourth mode selection button 452 in the virtual button bar, and sends the display instruction to the application when the selection signal for selecting the fourth mode selection button 452 is received, so that the application can only display the target text content (the section titles) according to the display instruction.

In at least one embodiment, in the fourth display mode, when a selection operation (such as a click) on the target text content is received, the application displays content between the current target text content and next target text content. For example, as illustrated in Fig. 11, when a selection operation on title "1, pre-preparation" is received, the application displays content between the title "1.pre-preparation" and the title "2. travel".

At block 209, in accordance with the claimed invention, a fourth preset instruction is sent to the application when the application is in the fourth display mode and a selection operation on the target text content is received. The fourth preset instruction is configured to instruct the application to copy selected target text content and paragraphs corresponding to the selected target text content.

In the related art, when the user needs to select a paragraph in the article, the user needs to select the paragraph by a drag, and efficiency is low. In order to further improve the efficiency for the user to copy entire text, the operating system layer sends the fourth preset instruction to the application when the selection operation on the target text content is received. After the application receives the fourth preset instruction, i.e., the application receives the selection operation on the target text content, the application copies the target text content and paragraphs corresponding to the selected target text content. In at least one embodiment, the paragraphs corresponding to the target text content is paragraphs following the current target text content.

For example, as illustrated in Fig. 11, when the selection operation on target text content "1, pre-preparation" is received, the application determines "1.pre-preparation" and the following paragraphs as the selected content according to the fourth preset instruction.

In the embodiment, when the operating system recognizes that the current display text content includes the section title, the operating system displays the mode selection button configured to trigger the application to enter the fourth display mode (in which only section titles in the text content are displayed), so that when the user clicks the mode selection button, the user can quickly view all the section titles in the current display content, thereby further improving reading efficiency of the user.

Since not all applications have a display mode switching function, in order to avoid impact of the mode selection buttons in the virtual button bar on applications that do not have the display mode switching function, in a possible implementation, on the basis of Fig. 1, as illustrated in Fig. 12, a step illustrated at block 104 is included before the step illustrated at block 101, and block 101 can be replaced by block 101A.

At block 104, a preset function button is displayed in the virtual button bar when the application is a preset application. The preset application is a reading and browsing type of application and the preset function button is configured to trigger displaying the mode selection button in the virtual button bar.

In a possible implementation, an application list is stored in the operating system in advance. Identifiers of preset applications having the display mode switching function arc stored in the application list. The preset application is the reading and browsing type of application, such as a web browser, an electronic book reader etc.. When an application is started, the terminal detects whether the application belongs to the application list, and the terminal displays the preset function button in the virtual button bar when the application belongs to the application list.

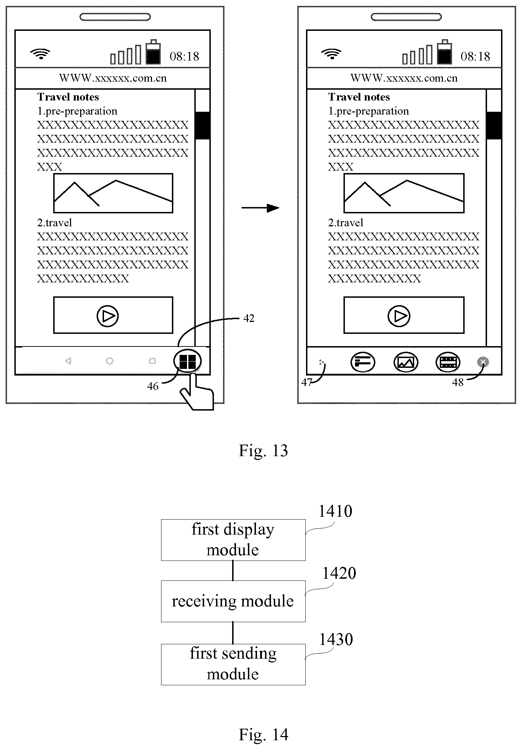

For example, as illustrated Fig. 13, when the application is the preset application, the terminal displays a preset function button 46 in the virtual button bar 42.

In at least one example, as illustrated Fig. 13, the virtual button bar 42 further displays a collapsing button 47 and an exit button 48. When a trigger signal for the collapsing button 47 is received, the virtual button bar 42 folds up respective mode selection buttons, and displays the preset function button 46. When a trigger signal for the exit button 48 is received, the virtual button bar 42 only displays virtual buttons provided by the operating system, and does not display the preset function button 46 and the respective mode selection buttons.

At block 101A, at least one mode selection button is displayed in the virtual button bar when a trigger signal for the preset function button is received.

During using applications, the user can determine whether to screen content according to needs. When it needs to screen the content, the user clicks the preset function button displayed in the virtual button bar. Correspondingly, when the terminal receives the trigger signal for the preset function button, the terminal displays at least one mode selection button in the virtual button bar. For specific manner of displaying the mode selection button in the virtual button bar, reference may be made to the descriptions of blocks 202 to 208, and details are not described herein again.

For example, as illustrated in Fig. 13, when a click signal for the preset function button 46 is received, the virtual button bar 42 further displays three mode selection buttons.

The following are device embodiments of the present disclosure. The device embodiments can be configured to perform the method embodiments of the present disclosure. For details not disclosed in device embodiments of the present disclosure, reference may be made to the method embodiments of the present disclosure.

Referring to Fig. 14, which illustrates a block diagram of a device for displaying content provided by an embodiment of the present disclosure. The device for displaying content can be realized as all or a part of a terminal through software, hardware, or a combination of them. The device for displaying content includes a first display module 1410, a receiving module 1420 and a first sending module 1430.

The first display module 1410 is configured to display at least one mode selection button in a virtual button bar. The mode selection button is configured to trigger an application to enter a corresponding display mode, and different types of content are displayed in the application under different display modes.

The receiving module 1420 is configured to receive a selection signal for selecting the mode selection button.

The first sending module 1430 is configured to send a display instruction to the application according to the display mode corresponding to the selected mode selection button. The display instruction is configured to instruct the application to enter the corresponding display mode.

In at least one embodiment, the first display module 1410 includes an obtaining unit, a recognizing unit and a first display unit.

The obtaining unit is configured to obtain current display content in the application.

The recognizing unit is configured to recognize a type of content included in the current display content. The type of the content included in the current display content includes at least one of text, pictures and multimedia.

The first display unit is configured to display the at least one mode selection button in the virtual button bar according to the type of the content included in the current display content.

In at least one embodiment, the first display unit is configured to: display a first mode selection button in the virtual button bar when the current display content includes text content, in which the first mode selection button is configured to trigger the application to enter a first display mode, and only the text content is displayed in the application in the first display mode; and/or display a second mode selection button in the virtual button bar when the current display content includes picture contcnt, in which the second mode selection button is configured to trigger the application to enter a second display mode, and only the picture content is displayed in the application in the second display mode; and/or display a third mode selection button in the virtual button bar when the current display content includes multimedia content, in which the third mode selection button is configured to trigger the application to enter a third display mode, and only the multimedia content is displayed in the application in the third display mode.

In at least one embodiment, the device further includes a second sending module, or a third sending module, or a fourth sending module.

The second sending module is configured to send a first preset instruction to the application when the application is in the first display mode and a selection operation on the text content is received. The first preset instruction is configured to instruct the application to copy selected text content.

The third sending module is configured to send a second preset instruction to the application when the application is in the second display mode and a selection operation on the picture content is received. The second preset instruction is configured to instruct the application to copy selected picture content.

The fourth sending module is configured to send a third preset instruction to the application when the application is in the third display mode and a selection operation on the multimedia content is received. The third preset instruction is configured to instruct the application to download selected multimedia content.

In at least one embodiment, the first display unit is further configured to: when the current display content includes text content, detect whether the text content includes target text content that is displayed in a format conforming to a title feature, and display a fourth mode selection button in the virtual button bar when the text content includes the target text content. The fourth mode selection button is configured to trigger the application to enter a fourth display mode, and only the target text content is displayed in the application in the fourth display mode.

In accordance with the invention, the device further includes a fifth sending module. The fifth sending module is configured to send a fourth preset instruction to the application when the application is in the fourth display mode and a selection operation on the target text content is received. The fourth preset instruction is configured to instruct the application to copy selected target text content and paragraphs corresponding to the selected target text content.

In at least one embodiment, when there are m mode selection buttons, the first display module further includes a second display unit and a third display unit.

The second display unit is configured to display the first mode selection button to the n^{th} mode selection button in the virtual button bar, where 1<n<m.

The third display unit is configured to display the (1+k)^{th} mode selection button to the (n+k)^{th} mode selection button in the virtual button bar when a sliding operation performed on the virtual button bar is detected, where k≥1, and

In at least one embodiment, the device further includes a second display module. The second display module is configured to display a preset function button in the virtual button bar when the application is a preset application. The preset application is a reading and browsing type of application, and the preset function button is configured to trigger displaying the mode selection button in the virtual button bar.

The first display module 1410 is further configured to display the at least one mode selection button in the virtual button bar when a trigger signal for the preset function button is received.

As described above, in embodiments of the present disclosure, the virtual button bar in the related art is functionally extended, by displaying at least one mode selection button in the virtual button bar, and sending the display instruction to the application to instruct the application to enter the corresponding display mode when the selection signal for selecting the mode selection button is received, the application only displays the content of user-specified type, and when more content is displayed in the application, it is convenient for the user to quickly screen reading content, thereby improving user's reading efficiency.

In embodiments of the present disclosure, the terminal displays the corresponding mode selection button in the virtual button bar according to the type of the current display content, so as to ensure that the application is able to enter the corresponding display mode according to the user sclcction, thereby improving the reading efficiency of the user.

In embodiments of the present disclosure, when the operating system recognizes that the current display text content includes the title, the operating system displays the mode selection button configured to trigger the application to enter the fourth display mode (in which, only title in the text content is displayed), so that when the user clicks the mode selection button, the user can quickly view all the titles in the current display content, thereby further improving reading efficiency of the user.

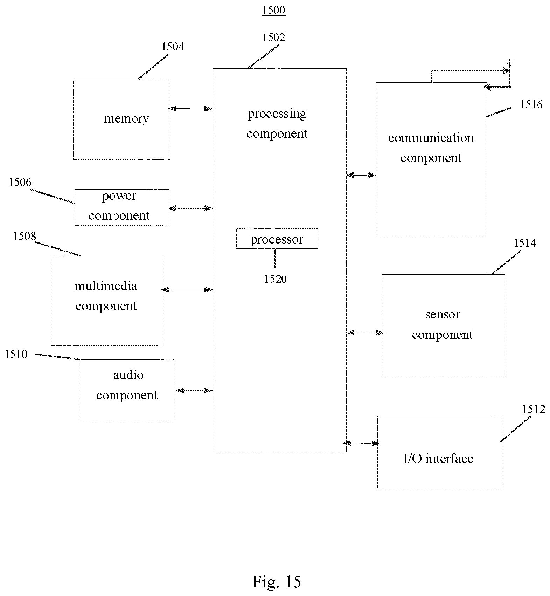

Fig. 15 is a block diagram illustrating a terminal 1500 according to an exemplary embodiment of the present disclosure.

Referring to Fig. 15, the terminal 1500 may include one or more of the following components: a processing component 1502, a memory 1504, a power component 1506, a multimedia component 1508, an audio component 1510, an input/output (I/O) interface 1512, a sensor component 1514, and a communication component 1516.

The processing component 1502 typically controls overall operations of the terminal 1500, such as the operations associated with display, telephone calls, data communications, camera operations, and recording operations. The processing component 1502 may include one or more processors 1520 to execute instructions to perform all or part of the steps in the above described methods. Moreover, the processing component 1502 may include one or more modules which facilitate the interaction between the processing component 1502 and other components. For instance, the processing component 1502 may include a multimedia module to facilitate the interaction between the multimedia component 1508 and the processing component 1502.

The memory 1504 is configured to store various types of data to support the operation of the terminal 1500. Examples of such data include instructions for any applications or methods operated on the terminal 1500, contact data, phonebook data, messages, pictures, video, etc. The memory 1504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1506 is configured to provide power to various components of the terminal 1500. The power component 1506 may include a power management system, one or more power sources, and any other components associated with the generation, management, and distribution of power in the terminal 1500.

The multimedia component 1508 includes a screen providing an output interface between the terminal 1500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action.

The audio component 1510 is configured to output and/or input audio signals. For example, the audio component 1510 includes a microphone (MIC) configured to receive an external audio signal when the terminal 1500 is in an operation mode, such as a call mode, a recording mode, and a voice recognition mode. The received audio signal may be further stored in the memory 1504 or transmitted via the communication component 1516. In some embodiments, the audio component 1510 further includes a speaker to output audio signals.

The I/O interface 1512 provides an interface between the processing component 1502 and peripheral interface modules, such as a keyboard, a click wheel, buttons, and the like. The buttons may include, but arc not limited to, a home button, a volume button, a starting button, and a locking button. In some embodiments, the I/O interface 1512 may be a physical button set on the front or the peripheral side of the terminal, and a fingerprint recognition module is provided in the physical button for acquiring user's fingerprint. The I/O interface 1512 may also be a fingerprint recognition area set on the rear cover of the terminal, and the fingerprint recognition area includes the fingerprint recognition module.

The sensor component 1514 includes one or more sensors to provide status assessments of various aspects of the terminal 1500. For instance, the sensor component 1514 may detect an open/closed status of the terminal 1500, relative positioning of components, e.g., the display and the keypad, of the terminal 1500. The sensor component 1514 may further detect a change in position of the terminal 1500 or a component of the terminal 1500, a presence or absence of user contact with the terminal 1500, an orientation or an acceleration/deceleration of the terminal 1500, and a change in temperature of the terminal 1500. The sensor component 1514 may include a proximity sensor configured to detect the presence of nearby objects without any physical contact. The sensor component 1514 may also include a light sensor, such as a CMOS or CCD image sensor, for use in imaging applications. In some embodiments, the sensor component 1514 may also include an accelerometer sensor and an angular velocity sensor for respectively acquiring acceleration data and angular velocity data of the terminal 1500.

The communication component 1516 is configured to facilitate communication, wired or wirelessly, between the terminal 1500 and other devices. The terminal 1500 can access a wireless network based on a communication standard, such as WiFi, 2G, or 3G, or a combination thereof. In one exemplary embodiment, the communication component 1516 receives a broadcast signal or broadcast associated information from an external broadcast management system via a broadcast channel. In one exemplary embodiment, the communication component 1516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 1500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described method for displaying content.

In exemplary embodiments, there is also provided a non-transitory computer-readable storage medium including instructions, such as the memory 1504 including instructions executable by the processor 1520 in the terminal 1500, for performing the above-described method for displaying content. For example, the computer-readable storage medium may be a ROM, a RAM, a CD-ROM, a magnetic tape, a floppy disc, an optical data storage device, and the like.

Other embodiments of the present disclosure will be apparent to those skilled in the art from consideration of the specification and practice of the present disclosure disclosed here. This application is intended to cover any variations, uses, or adaptations of the present disclosure following the general principles thereof and including such departures from the present disclosure as come within known or customary practice in the art. It is intended that the specification and examples be considered as exemplary only, with a true scope of the present disclosure being indicated by the following claims.

## Claims

1. A method for displaying content, comprising:
displaying (101) at least one mode selection button in a virtual button bar, wherein each mode selection button is configured to trigger an application to enter a corresponding display mode, and different types of content are displayed in the application under different display modes;
receiving (102, 204) a selection signal for selecting one of said mode selection buttons; and
sending (103, 205) a display instruction to the application according to the display mode corresponding to the selected mode selection button, wherein the display instruction is configured to instruct the application to enter the corresponding display mode;
the method **characterised in that** said displaying (101) at least one mode selection button in the virtual button bar comprises:
obtaining (201) current display content in the application,
recognizing (202) whether the current display content comprises at least one of the following types of display content:
text, pictures and multimedia; and
displaying (203) a mode selection button in the virtual button bar according to each one of the recognized types of content comprised in the current display content;
wherein said displaying (203) each mode selection button in the virtual button bar according to each one of the recognized types of content comprised in the current display content comprises:
when the current display content comprises text content, detecting (203D) whether the text content comprises target text content conforming to a title feature, and
displaying (203E) a fourth mode selection button in the virtual button bar when the text content comprises the target text content, wherein the fourth mode selection button is configured to trigger the application to enter a fourth display mode, and only the target text content is displayed in the application in the fourth display mode and the method further comprises:
sending (209) a fourth preset instruction to the application when the application is in the fourth display mode and a selection operation on the target text content is received, wherein the fourth preset instruction is configured to instruct the application to copy selected target text content and paragraphs corresponding to the selected target text content.

2. The method according to claim 1, wherein displaying (203) each mode selection button in the virtual button bar comprises:
displaying (203A) a first mode selection button in the virtual button bar when the current display content comprises text content, wherein the first mode selection button is configured to trigger the application to enter a first display mode, and only the text content is displayed in the application in the first display mode;
and/or
displaying (203B) a second mode selection button in the virtual button bar when the current display content comprises picture content, wherein the second mode selection button is configured to trigger the application to enter a second display mode, and only the picture content is displayed in the application in the second display mode;
and/or
displaying (203C) a third mode selection button in the virtual button bar when the current display content comprises multimedia content, wherein the third mode selection button is configured to trigger the application to enter a third display mode, and only the multimedia content is displayed in the application in the third display mode.

3. The method according to claim 2, further comprising:
when the application is in the first display mode, sending (206) a first preset instruction to the application when a first selection operation on the text content is received in the first display mode, wherein the first preset instruction is configured to instruct the application to copy selected text content;
or
when the application is in the second display mode, sending (207) a second preset instruction to the application when a second selection operation on the picture content is received in the second display mode, wherein the second preset instruction is configured to instruct the application to copy selected picture content;
or
when the application is in the third display mode, sending (208) a third preset instruction to the application when a third selection operation on the multimedia content is received in the third display mode, wherein the third preset instruction is configured to instruct the application to download selected multimedia content.

4. The method according to any one of claims 1 to 3, wherein when there are m mode selection buttons, displaying (101) at least one mode selection button in the virtual button bar comprises:
displaying the first mode selection button to the n^{th} mode selection button in the virtual button bar, where 1<n<m; and
displaying the (1+k)^{th} mode selection button to the (n+k)^{th} mode selection button in the virtual button bar when detecting a sliding operation performed on the virtual button bar, where k≥1, and

5. The method according to any one of claims 1 to 3, wherein before displaying (101) at least one mode selection button in the virtual button bar, the method further comprises:
displaying (104) a preset function button in the virtual button bar when the application is a preset application, wherein the preset application is a reading and browsing type of application, and the preset function button is configured to trigger displaying the mode selection button in the virtual button bar;
wherein, displaying (101) at least one mode selection button in the virtual button bar comprises:
displaying (101A) the at least one mode selection button in the virtual button bar when receiving a trigger signal for the preset function button.

6. A device for displaying content, comprising:
a first display module (1410), configured to display at least one mode selection button in a virtual button bar, wherein each mode selection button is configured to trigger an application to enter a corresponding display mode, and different types of content are displayed in the application under different display modes;
a receiving module (1420), configured to receive a selection signal for selecting one of the mode selection buttons; and
a first sending module (1430), configured to send a display instruction to the application according to the display mode corresponding to the selected mode selection button, wherein the display instruction is configured to instruct the application to enter the corresponding display mode;
the device **characterised in that**
the first display module (1410) comprises:
an obtaining unit, configured to obtain current display content in the application,
a recognizing unit, configured to recognize whether the current display content comprises at least one the following types of display content: text, pictures and multimedia, and
a first display unit, configured to display a mode selection button in the virtual button bar according to each one of the recognized types of content comprised in the current display content;
and
the first display unit is further configured to:
when the current display content comprises text content, detect whether the text content comprises target text content conforming to a title feature, and display a fourth mode selection button in the virtual button bar when the text content comprises the target text content, wherein the fourth mode selection button is configured to trigger the application to enter a fourth display mode, and only the target text content is displayed in the application in the fourth display mode; and the device further comprises a fifth sending module, configured to send a fourth preset instruction to the application when the application is in the fourth display mode and a selection operation on the target text content is received, wherein the fourth preset instruction is configured to instruct the application to copy selected target text content and paragraphs corresponding to the selected target text content.

7. The device according to claim 6, wherein the first display unit is configured to:
display a first mode selection button in the virtual button bar when the current display content comprises text content, wherein the first mode selection button is configured to trigger the application to enter a first display mode, and only the text content is displayed in the application in the first display mode;
and/or
display a second mode selection button in the virtual button bar when the current display content comprises picture content, wherein the second mode selection button is configured to trigger the application to enter a second display mode, and only the picture content is displayed in the application in the second display mode;
and/or
display a third mode selection button in the virtual button bar when the current display content comprises multimedia content, wherein the third mode selection button is configured to trigger the application to enter a third display mode, and only the multimedia content is displayed in the application in the third display mode.

8. The device according to claim 7, further comprising:
a second sending module, configured to, when the application is in the first display mode, send a first preset instruction to the application when a first selection operation on the text content is received in the first display mode, wherein the first preset instruction is configured to instruct the application to copy selected text content;
or
a third sending module, configured to, when the application is in the second display mode, send a second preset instruction to the application when a second selection operation on the picture content is received in the second display mode, wherein the second preset instruction is configured to instruct the application to copy selected picture content;
or
a fourth sending module, configured to, when the application is in the third display mode, sending a third preset instruction to the application when a third selection operation on the multimedia content is received in the third display mode, wherein the third preset instruction is configured to instruct the application to download selected multimedia content.

9. A computer-readable medium, with program instructions stored thereon that, when executed by a processor, make the processor perform the method for displaying content according to any one of claims 1 to 5.

## Patentansprüche

1. Verfahren zum Anzeigen von Inhalt, umfassend:
Anzeigen (101) mindestens eines Modusauswahlschalters in einer virtuellen Schalterleiste, wobei jeder Modusauswahlschalter konfiguriert ist, eine Anwendung auszulösen, in einen entsprechenden Anzeigemodus einzutreten und unterschiedliche Inhaltstypen in der Anwendung unter unterschiedlichen Anzeigemodi angezeigt werden;
Empfangen (102, 204) eines Auswahlsignals zum Auswählen eines der Modusauswahlschalter; und
Senden (103, 205) einer Anzeigeanweisung an die Anwendung gemäß dem Auswahlmodus, entsprechend dem ausgewählten Modusauswahlschalter, wobei die Anzeigeanweisung konfiguriert ist, die Anwendung anzuweisen, in den entsprechenden Anzeigemodus einzutreten;
das Verfahren **dadurch gekennzeichnet, dass**:
das Anzeigen (101) mindestens eines Modusauswahlschalters in der virtuellen Schalterleiste umfasst:
Erhalten (201) von aktuellem Anzeigeinhalt in der Anwendung,
Erkennen (202), ob der aktuelle Anzeigeinhalt mindestens einen der folgenden Typen von Anzeigeinhalt umfasst:
Text, Bilder und Multimedia; und
Anzeigen (203) eines Modusauswahlschalters in der virtuellen Schalterleiste, gemäß jedem der erkannten Inhaltstypen, die in dem aktuellen Anzeigeinhalt umfasst sind;
wobei das Anzeigen (203) jedes Modusauswahlschalters in der virtuellen Schalterleiste gemäß jedem der erkannten Inhaltstypen, die in dem aktuellen Anzeigeinhalt umfasst sind, umfasst:
wenn der aktuelle Anzeigeinhalt Textinhalt umfasst, Erfassen (203D), ob der Textinhalt Zieltextinhalt umfasst, der einem Titelmerkmal entspricht, und
Anzeigen (203E) eines vierten Modusauswahlschalters in der virtuellen Schalterleiste, wenn der Textinhalt den Zieltextinhalt umfasst, wobei der vierte Modusauswahlschalter konfiguriert ist, die Anwendung auszulösen, in einen vierten Anzeigemodus einzutreten, und nur der Zieltextinhalt in der Anwendung in dem vierten Anzeigemodus angezeigt wird und das Verfahren weiter umfasst:
Senden (209) einer vierten voreingestellten Anweisung an die Anwendung, wenn die Anwendung in dem vierten Anzeigemodus ist und ein Auswahlbetrieb an dem Zieltextinhalt empfangen wird,
wobei die vierte voreingestellte Anweisung konfiguriert ist, die Anwendung anzuweisen, ausgewählten Zieltextinhalt und Absätze entsprechend dem ausgewählten Zieltextinhalt zu kopieren.

2. Verfahren nach Anspruch 1, wobei Anzeigen (203) jedes Modusauswahlschalters in der virtuellen Schalterleiste umfasst:
Anzeigen (203A) eines ersten Modusauswahlschalters in der virtuellen Schalterleiste, wenn der aktuelle Anzeigeinhalt Textinhalt umfasst, wobei der erste Modusauswahlschalter konfiguriert ist, die Anwendung auszulösen, in einen ersten Anzeigemodus einzutreten, und nur der Textinhalt in der Anwendung in dem ersten Anzeigemodus angezeigt wird;
und/oder
Anzeigen (203B) eines zweiten Modusauswahlschalters in der virtuellen Schalterleiste, wenn der aktuelle Anzeigeinhalt Bildinhalt umfasst, wobei der zweite Modusauswahlschalter konfiguriert ist, die Anwendung auszulösen, in einen zweiten Anzeigemodus einzutreten, und nur der Bildinhalt in der Anwendung in dem zweiten Anzeigemodus angezeigt wird;
und/oder
Anzeigen (203C) eines dritten Modusauswahlschalters in der virtuellen Schalterleiste, wenn der aktuelle Anzeigeinhalt Multimediainhalt umfasst, wobei der dritte Modusauswahlschalter konfiguriert ist, die Anwendung auszulösen, in einen dritten Anzeigemodus einzutreten, und nur der Multimediainhalt in der Anwendung in dem dritten Anzeigemodus angezeigt wird.

3. Verfahren nach Anspruch 2, weiter umfassend:
wenn die Anwendung in dem ersten Anzeigemodus ist, Senden (206) einer ersten voreingestellten Anweisung an die Anwendung, wenn ein erster Auswahlbetrieb an dem Textinhalt in dem ersten Anzeigemodus empfangen wird, wobei die erste voreingestellte Anweisung konfiguriert ist, die Anwendung anzuweisen, ausgewählten Textinhalt zu kopieren;
oder
wenn die Anwendung in dem zweiten Anzeigemodus ist, Senden (207) einer zweiten voreingestellten Anweisung an die Anwendung, wenn ein zweiter Auswahlbetrieb an dem Bildinhalt in dem zweiten Anzeigemodus empfangen wird, wobei die zweite voreingestellte Anweisung konfiguriert ist, die Anwendung anzuweisen, ausgewählten Bildinhalt zu kopieren;
oder
wenn die Anwendung in dem dritten Anzeigemodus ist, Senden (208) einer dritten voreingestellten Anweisung an die Anwendung, wenn ein dritter Auswahlbetrieb an dem Multimediainhalt in dem dritten Anzeigemodus empfangen wird, wobei die dritte voreingestellte Anweisung konfiguriert ist, die Anwendung anzuweisen, ausgewählten Multimediainhalt herunterzuladen.

4. Verfahren nach einem der Ansprüche 1 bis 3, wobei, wenn es m Modusauswahlschalter gibt, Anzeigen (101) mindestens eines Modusauswahlschalters in der virtuellen Schalterleiste umfasst:
Anzeigen des ersten Modusauswahlschalters bis zum n-ten Modusauswahlschalter in der virtuellen Schalterleiste, wobei 1<n<m ist; und
Anzeigen des (1+k)-ten Modusauswahlschalters bis zum (n+k)-ten Modusauswahlschalter in der virtuellen Schalterleiste, wenn ein Wischbetrieb erkannt wird, der an der virtuellen Schalterleiste durchgeführt wird, wobei k≥1 und (n+k)≤m ist.

5. Verfahren nach einem der Ansprüche 1 bis 3, wobei vor Anzeigen (101) mindestens eines Modusauswahlschalters in der virtuellen Schalterleiste, das Verfahren weiter umfasst:
Anzeigen (104) eines voreingestellten Funktionsschalters in der virtuellen Schalterleiste, wenn die Anwendung eine voreingestellte Anwendung ist, wobei die voreingestellte Anwendung eine Lese- und Durchsuchanwendung ist und der voreingestellte Funktionsschalter konfiguriert ist, Anzeigen des Modusauswahlschalters in der virtuellen Schalterleiste auszulösen;
wobei Anzeigen (101) mindestens eines Modusauswahlschalters in der virtuellen Schalterleiste umfasst:
Anzeigen (101A) des mindestens einen Modusauswahlschalters in der virtuellen Schalterleiste, wenn ein Auslösesignal für den voreingestellten Funktionsschalter empfangen wird.

6. Vorrichtung zum Anzeigen von Inhalt, umfassend:
ein erstes Anzeigemodul (1410), das konfiguriert ist, mindestens einen Modusauswahlschalter in einer virtuellen Schalterleiste anzuzeigen, wobei jeder Modusauswahlschalter konfiguriert ist, eine Anwendung auszulösen, in einen entsprechenden Anzeigemodus einzutreten, und unterschiedliche Inhaltstypen in der Anwendung unter unterschiedlichen Anzeigemodi angezeigt werden;
ein Empfangsmodul (1420), das konfiguriert ist, ein Auswahlsignal zum Auswählen eines der Modusauswahlschalter zu empfangen; und
ein erstes Sendemodul (1430), das konfiguriert ist, eine Anzeigeanweisung an die Anwendung gemäß dem Anzeigemodus zu senden, der dem ausgewählten Modusauswahlschalter entspricht, wobei die Anzeigeanweisung konfiguriert ist, die Anwendung anzuweisen, in den entsprechenden Anzeigemodus einzutreten;
die Vorrichtung **dadurch gekennzeichnet, dass**:
das erste Anzeigemodul (1410) umfasst:
eine Erhaltungseinheit, die konfiguriert ist, aktuellen Anzeigeinhalt in der Anwendung zu erhalten,
eine Erkennungseinheit, die konfiguriert ist, zu erkennen, ob der aktuelle Anzeigeinhalt mindestens einen der folgenden Anzeigeinhalttypen umfasst: Text, Bilder und Multimedia, und
eine erste Anzeigeeinheit, die konfiguriert ist, einen Modusauswahlschalter in der virtuellen Schalterleiste gemäß jedem der erkannten Inhaltstypen anzuzeigen, die in dem aktuellen Anzeigeinhalt umfasst sind;
und
die erste Anzeigeeinheit weiter konfiguriert ist zum:
wenn der aktuelle Anzeigeinhalt Textinhalt umfasst, Erfassen, ob der Textinhalt Zieltextinhalt umfasst, der einem Titelmerkmal entspricht, und
Anzeigen eines vierten Modusauswahlschalters in der virtuellen Schalterleiste, wenn der Textinhalt den Zieltextinhalt umfasst, wobei der vierte Modusauswahlschalter konfiguriert ist, die Anwendung auszulösen, in einen vierten Anzeigemodus einzutreten, und nur der Zieltextinhalt in der Anwendung in dem vierten Anzeigemodus angezeigt wird; und die Vorrichtung weiter ein fünftes Sendemodul umfasst, das konfiguriert ist, eine vierte voreingestellte Anweisung an die Anwendung zu senden, wenn die Anwendung in dem vierten Anzeigemodus ist und ein Auswahlbetrieb an dem Zieltextinhalt empfangen wird, wobei die vierte voreingestellte Anweisung konfiguriert ist, die Anwendung anzuweisen, ausgewählten Zieltextinhalt und Absätze entsprechend dem ausgewählten Zieltextinhalt zu kopieren.

7. Vorrichtung nach Anspruch 6, wobei die erste Anzeigeeinheit konfiguriert ist, zum:
Anzeigen eines ersten Modusauswahlschalters in der virtuellen Schalterleiste, wenn der aktuelle Anzeigeinhalt Textinhalt umfasst, wobei der erste Modusauswahlschalter konfiguriert ist, die Anwendung auszulösen, in einen ersten Anzeigemodus einzutreten und nur der Textinhalt in der Anwendung in dem ersten Anzeigemodus angezeigt wird;
und/oder
Anzeigen eines zweiten Modusauswahlschalters in der virtuellen Schalterleiste, wenn der aktuelle Anzeigeinhalt Bildinhalt umfasst, wobei der zweite Modusauswahlschalter konfiguriert ist, die Anwendung auszulösen, in einen zweiten Anzeigemodus einzutreten, und nur der Bildinhalt in der Anwendung in dem zweiten Anzeigemodus angezeigt wird;
und/oder
Anzeigen eines dritten Modusauswahlschalters in der virtuellen Schalterleiste, wenn der aktuelle Anzeigeinhalt Multimediainhalt umfasst, wobei der dritte Modusauswahlschalter konfiguriert ist, die Anwendung auszulösen, in einen dritten Anzeigemodus einzutreten, und nur der Multimediainhalt in der Anwendung in dem dritten Anzeigemodus angezeigt wird.

8. Vorrichtung nach Anspruch 7, weiter umfassend:
ein zweites Sendemodul, das konfiguriert ist, wenn die Anwendung in dem ersten Anzeigemodus ist, eine erste voreingestellte Anweisung an die Anwendung zu senden, wenn ein erster Auswahlbetrieb an dem Textinhalt in dem ersten Anzeigemodus empfangen wird, wobei die erste voreingestellte Anweisung konfiguriert ist, die Anwendung anzuweisen, ausgewählten Textinhalt zu kopieren;
oder
ein drittes Sendemodul, das konfiguriert ist, wenn die Anwendung in dem zweiten Anzeigemodus ist, eine zweite voreingestellte Anwendung an die Anwendung zu senden, wenn ein zweiter Auswahlbetrieb an dem Bildinhalt in dem zweiten Anzeigemodus empfangen wird, wobei die zweite voreingestellte Anweisung konfiguriert ist, die Anwendung anzuweisen, ausgewählten Bildinhalt zu kopieren;
oder
ein viertes Sendemodul, das konfiguriert ist, wenn die Anwendung in dem dritten Anzeigemodus ist, eine dritte voreingestellte Anweisung an die Anwendung zu senden, wenn ein dritter Auswahlbetrieb an dem Multimediainhalt in dem dritten Anzeigemodus empfangen wird, wobei die dritte voreingestellte Anweisung konfiguriert ist, die Anwendung anzuweisen, ausgewählten Multimediainhalt herunterzuladen.

9. Computerlesbares Medium mit Programmanweisungen darauf gespeichert, die, wenn von einem Prozessor ausgeführt, den Prozessor veranlassen, das Verfahren zum Anzeigen von Inhalt gemäß einem der Ansprüche 1 bis 5 durchzuführen.

## Revendications

1. Procédé pour afficher un contenu, comprenant les étapes consistant à :
afficher (101) au moins un bouton de sélection de mode dans une barre de boutons virtuels, dans lequel chaque bouton de sélection de mode est configuré pour déclencher une application pour entrer dans un mode d'affichage correspondant, et différents types de contenu sont affichés dans l'application sous différents modes d'affichage ;
recevoir (102, 204) un signal de sélection pour sélectionner l'un desdits boutons de sélection de mode ; et
envoyer (103, 205) une instruction d'affichage à l'application selon le mode d'affichage correspondant au bouton de sélection de mode sélectionné, dans lequel l'instruction d'affichage est configurée pour ordonner à l'application d'entrer dans le mode d'affichage correspondant ;
le procédé **caractérisé en ce que**
ledit affichage (101) d'au moins un bouton de sélection de mode dans la barre de boutons virtuels comprend les étapes consistant à :
obtenir (201) un contenu d'affichage actuel dans l'application,
reconnaître (202) si le contenu d'affichage actuel comprend au moins un des types suivants de contenu d'affichage :
texte, images et multimédia ;
afficher (203) un bouton de sélection de mode dans la barre de boutons virtuels en fonction de chacun des types de contenu reconnu compris dans le contenu d'affichage actuel ;
dans lequel ledit affichage (203) de chaque bouton de sélection de mode dans la barre de boutons virtuels en fonction de chacun des types de contenu reconnus compris dans le contenu d'affichage actuel comprend :
lorsque le contenu d'affichage actuel comprend un contenu de texte, détecter (203D) si le contenu de texte comprend un contenu de texte cible se conforme à une caractéristique de titre, et
afficher (203E) un quatrième bouton de sélection de mode dans la barre de boutons virtuels lorsque le contenu de texte comprend le contenu de texte cible, dans lequel le quatrième bouton de sélection de mode est configuré pour déclencher l'application pour entrer dans un quatrième mode d'affichage, et seul le contenu de texte cible est affiché dans l'application dans le quatrième mode d'affichage et le procédé comprend en outre les étapes consistant à :
envoyer (209) une quatrième instruction prédéfinie à l'application lorsque l'application est dans le quatrième mode d'affichage et qu'une opération de sélection sur le contenu de texte cible est reçue,
dans lequel la quatrième instruction prédéfinie est configurée pour ordonner à l'application de copier un contenu de texte cible sélectionné et des paragraphes correspondant au contenu de texte cible sélectionné.

2. Procédé selon la revendication 1, dans lequel l'affichage (203) de chaque bouton de sélection de mode dans la barre de boutons virtuels comprend les étapes consistant à :
afficher (203A) un premier bouton de sélection de mode dans la barre de boutons virtuels lorsque le contenu d'affichage actuel comprend un contenu de texte, dans lequel le premier bouton de sélection de mode est configuré pour déclencher l'application pour entrer dans un premier mode d'affichage, et seul le contenu de texte est affiché dans l'application dans le premier mode d'affichage ;
et/ou
afficher (203B) un deuxième bouton de sélection de mode dans la barre de boutons virtuels lorsque le contenu d'affichage actuel comprend un contenu d'image, dans lequel le deuxième bouton de sélection de mode est configuré pour déclencher l'application pour entrer dans un deuxième mode d'affichage, et seul le contenu d'image est affiché dans l'application dans le deuxième mode d'affichage ;
et/ou
afficher (203C) un troisième bouton de sélection de mode dans la barre de boutons virtuels lorsque le contenu d'affichage actuel comprend un contenu multimédia, dans lequel le troisième bouton de sélection de mode est configuré pour déclencher l'application pour entrer dans un troisième mode d'affichage, et seul le contenu multimédia est affiché dans l'application dans le troisième mode d'affichage.

3. Procédé selon la revendication 2, comprenant en outre ;
lorsque l'application est dans le premier mode d'affichage, un envoi (206) d'une première instruction prédéfinie à l'application lorsqu'une première opération de sélection sur le contenu de texte est reçue dans le premier mode d'affichage, dans lequel la première instruction prédéfinie est configurée pour ordonner à l'application de copier le contenu de texte sélectionné ;
ou
lorsque l'application est dans le deuxième mode d'affichage, un envoi (207) d'une deuxième instruction prédéfinie à l'application lorsqu'une deuxième opération de sélection sur le contenu d'image est reçue dans le deuxième mode d'affichage, dans lequel la deuxième instruction prédéfinie est configurée pour ordonner à l'application de copier le contenu d'image sélectionné ;
ou
lorsque l'application est dans le troisième mode d'affichage, un envoi (208) d'une troisième instruction prédéfinie à l'application lorsqu'une troisième opération de sélection sur le contenu multimédia est reçue dans le troisième mode d'affichage, dans lequel la troisième instruction prédéfinie est configurée pour ordonner à l'application de télécharger le contenu multimédia sélectionné.

4. Procédé selon l'une quelconque des revendications 1 à 3, dans lequel, lorsqu'il y a m boutons de sélection de mode, l'affichage (101) d'au moins un bouton de sélection de mode dans la barre de boutons virtuels comprend les étapes consistant à :
afficher le premier bouton de sélection de mode sur le n^{ième} bouton de sélection de mode dans la barre de boutons virtuels, où l < n < m ; et
afficher le (l+k)^{ième} bouton de sélection de mode sur le (n+k)^{ième} bouton de sélection de mode dans la barre de boutons virtuels lors d'une détection d'une opération de glissement effectuée sur la barre de boutons virtuels, où k ≥ l, et (n+k) ≤ m.

5. Procédé selon l'une quelconque des revendications 1 à 3, dans lequel, avant l'affichage (101) d'au moins un bouton de sélection de mode dans la barre de boutons virtuels, le procédé comprend en outre l'étape consistant à :
afficher (104) un bouton de fonction prédéfinie dans la barre de boutons virtuels lorsque l'application est une application prédéfinie, dans lequel l'application prédéfinie est un type d'application de lecture et de navigation, et le bouton de fonction prédéfinie est configuré pour déclencher l'affichage du bouton de sélection de mode dans la barre de boutons virtuels ;
dans lequel l'affichage (101) d'au moins un bouton de sélection de mode dans la barre de boutons virtuels comprend l'étape consistant à :
afficher (101A) le au moins un bouton de sélection de mode dans la barre de boutons virtuels lors de la réception d'un signal de déclenchement pour le bouton de fonction prédéfinie.

6. Dispositif d'affichage de contenu, comprenant :
un premier module d'affichage (1410), configuré pour afficher au moins un bouton de sélection de mode dans une barre de boutons virtuels, dans lequel chaque bouton de sélection de mode est configuré pour déclencher une application pour entrer dans un mode d'affichage correspondant, et différents types de contenu sont affichés dans l'application sous différents modes d'affichage ;
un module de réception (1420), configuré pour recevoir un signal de sélection pour sélectionner l'un des boutons de sélection de mode ; et
un premier module d'envoi (1430), configuré pour envoyer une instruction d'affichage à l'application selon le mode d'affichage correspondant au bouton de sélection de mode sélectionné, dans lequel l'instruction d'affichage est configurée pour ordonner à l'application d'entrer dans le mode d'affichage correspondant ;
le dispositif étant **caractérisé en ce que**
le premier module d'affichage (1410) comprend :
une unité d'obtention, configurée pour obtenir un contenu d'affichage actuel dans l'application,
une unité de reconnaissance, configurée pour reconnaître si le contenu d'affichage actuel comprend au moins un des types de contenu d'affichage suivants :
texte, images et multimédia, et
une première unité d'affichage, configurée pour afficher un bouton de sélection de mode dans la barre de boutons virtuels en fonction de chacun des types de contenu reconnus compris dans le contenu d'affichage actuel ;
et
la première unité d'affichage est en outre configurée pour :
lorsque le contenu d'affichage actuel comprend un contenu de texte, détecter si le contenu de texte comprend un contenu de texte cible se conformant à une caractéristique de titre, et
afficher un quatrième bouton de sélection de mode dans la barre de boutons virtuels lorsque le contenu de texte comprend le contenu de texte cible, dans lequel le quatrième bouton de sélection de mode est configuré pour déclencher l'application pour entrer dans un quatrième mode d'affichage, et seul le contenu de texte cible est affiché dans l'application dans le quatrième mode d'affichage ; et le dispositif comprend en outre un cinquième module d'envoi, configuré pour envoyer une quatrième instruction prédéfinie à l'application lorsque l'application est dans le quatrième mode d'affichage et une opération de sélection sur le contenu de texte cible est reçue, dans lequel la quatrième instruction prédéfinie est configurée pour ordonner à l'application de copier le contenu de texte cible sélectionné et des paragraphes correspondant au contenu de texte cible sélectionné.

7. Dispositif selon la revendication 6, dans lequel la au moins une unité de commande de rigidité est configurée pour :
afficher un premier bouton de sélection de mode dans la barre de boutons virtuels lorsque le contenu d'affichage actuel comprend un contenu de texte, dans lequel le premier bouton de sélection de mode est configuré pour déclencher l'application pour entrer dans un premier mode d'affichage, et seul le contenu de texte est affiché dans l'application dans le premier mode d'affichage ;
et/ou
afficher un deuxième bouton de sélection de mode dans la barre de boutons virtuels lorsque le contenu d'affichage actuel comprend un contenu d'image, dans lequel le deuxième bouton de sélection de mode est configuré pour déclencher l'application pour entrer dans un deuxième mode d'affichage, et seul le contenu d'image est affiché dans l'application dans le deuxième mode d'affichage ;
et/ou
afficher un troisième bouton de sélection de mode dans la barre de boutons virtuels lorsque le contenu d'affichage actuel comprend un contenu multimédia, dans lequel le troisième bouton de sélection de mode est configuré pour déclencher l'application pour entrer dans un troisième mode d'affichage, et seul le contenu multimédia est affiché dans l'application dans le troisième mode d'affichage.

8. Dispositif selon la revendication 7, comprenant en outre :
un deuxième module d'envoi, configuré pour, lorsque l'application est dans le premier mode d'affichage, envoyer une première instruction prédéfinie à l'application lorsqu'une première opération de sélection sur le contenu de texte est reçue dans le premier mode d'affichage, dans lequel la première instruction prédéfinie est configurée pour ordonner à l'application de copier le contenu de texte sélectionné ;
ou
un troisième module d'envoi, configuré pour, lorsque l'application est dans le deuxième mode d'affichage, envoyer une deuxième instruction prédéfinie à l'application lorsqu'une deuxième opération de sélection sur le contenu d'image est reçue dans le deuxième mode d'affichage, dans lequel la deuxième instruction prédéfinie est configurée pour ordonner à l'application de copier le contenu d'image sélectionné ;
ou
un quatrième module d'envoi, configuré pour, lorsque l'application est dans le troisième mode d'affichage, envoyer une troisième instruction prédéfinie à l'application lorsqu'une troisième opération de sélection sur le contenu multimédia est reçue dans le troisième mode d'affichage, dans lequel la troisième instruction prédéfinie est configurée pour ordonner à l'application de télécharger le contenu multimédia sélectionné.

9. Support lisible par ordinateur, sur lequel sont stockées des instructions de programme qui, lorsqu'elles sont exécutées par un processeur, amènent le processeur à exécuter le procédé d'affichage de contenu selon l'une quelconque des revendications 1 à 5.
